Europäisches Patentamt

European Patent Office

Office européen des brevets

(11) Veröffentlichungsnummer: **0 485 872 A2**

## EUROPÄISCHE PATENTANMELDUNG

(21) Anmeldenummer: **91118872.0**

(22) Anmeldetag: **06.11.91**

(51) Int. Cl.⁵: **G01N 23/221**, G01N 23/06, G01V 5/00

(30) Priorität: **16.11.90 DE 4036605**

(43) Veröffentlichungstag der Anmeldung:
**20.05.92 Patentblatt 92/21**

(84) Benannte Vertragsstaaten:
**AT BE CH DE DK ES FR GB GR IT LI LU NL SE**

(71) Anmelder: **Messerschmitt-Bölkow-Blohm GmbH**
**Robert-Koch-Strasse**
**W-8012 Ottobrunn(DE)**

(72) Erfinder: **Pongratz, Hans-Wolfgang, Dr.**
**Egerländer Strasse 3**
**W-8028 Taufkirchen(DE)**

Erfinder: **Bastian, Ingbert, Dr.**
**Laurinweg 10**
**W-8012 Ottobrunn(DE)**
Erfinder: **Moritz, Nikolaus**
**Akazienstrasse 32**
**W-8028 Taufkirchen(DE)**
Erfinder: **Triftshäuser, Werner, Prof. Dr.**
**Ringelnatzweg 3**
**W-8012 Ottobrunn(DE)**
Erfinder: **Kögel, Gottfried**
**Mädelegabelstrasse 28**
**W-8000 München 82(DE)**
Erfinder: **Sperr, Peter**
**Hausnerstrasse 15**
**W-8011 Kirchheim(DE)**

(54) **Einrichtung zur Erkennung von stickstoff-, phosphor-, chlor- und/oder sauerstoffhaltigen Substanzen.**

(57) Die Erfindung betrifft eine Einrichtung zur Erkennung von stickstoff-, phosphor-, chlor- und/oder sauerstoffhaltigen Substanzen innerhalb eines Objektes, insbesondere von Spreng- oder Suchtstoffen in Gepäckstücken, mit einer kernphysikalischen Aktivierungsvorrichtung zur Erzeugung von Positronenstrahlern aus Stickstoff, Phosphor, Chlor und/oder Sauerstoff und einer nachgeordneten Aktivitätsmeßvorrichtung zur Registrierung von Positron-Elektron-Annihilationsstrahlung.

FIG.1

Die Erfindung betrifft eine Einrichtung zur Erkennung von stickstoff-, phosphor-, chlor- und/oder sauerstoffhaltigen Substanzen innerhalb eines Objektes, insbesondere von Spreng- oder Suchtstofen in Gepäckstücken, mit einer kernphysikalischen Aktivierungsvorrichtung zur Erzeugung von Positronenstrahlern aus Stickstoff, Phosphor, Chlor und/oder Sauerstoff und einer nachgeordneten Aktivitätsmeßvorrichtung zur Registrierung von Positron-Elektron-Annihilationsstrahlung.

Eine Einrichtung dieser Art ist aus der EP 0 358 237 A1 bekannt. Bei einer derartigen Einrichtung werden die zu untersuchenden Gepäckstücke auf einem Transportband durch eine Bestrahlungskammer geführt und dort mit Röntgenstrahlung (Gammastrahlung) zwischen 10,6 MeV und 13 MeV bestrahlt. Befinden sich in dem Gepäckstück stickstoffhaltige Substanzen, die auf das Vorhandensein von Sprengstoffen hinweisen würden, so werden durch die Röntgenstrahlung die $^{14}$N-Atome in radioaktive $^{13}$N-Atome umgewandelt. Die $^{13}$N-Atome sind Positronen-Strahler, wobei die entstehenden Positronen beim Auftreffen auf Elektronen die bekannte Annihilationsstrahlung von 0,511 MeV verursachen. Ein derart bestrahltes Gepäckstück verläßt dann die Bestrahlungskammer und gelangt daraufhin in den Bereich von Scintillationszählern, welche eventuell abgegebene Annihilationsstrahlung detektieren sollen. Aus den Signalen der Scintillationszähler wird dann mittels eines Rechners auf die Stickstoffkonzentration in dem Gepäckstück geschlossen. Die bekannte Anordnung ermöglicht jedoch keine Aussage über die räumliche Verteilung der stickstoffhaltigen Substanzen im Gepäckstück und kann somit nur einen sehr groben Hinweis auf das Vorhandensein von Sprengstoffen liefern.

Eine genauere räumliche Auflösung über die Verteilung von stickstoffhaltigen Substanzen ist mit der aus der EP 0 218 240 A2 bekannten Einrichtung möglich. Diese Einrichtung legt jedoch den Aktivierungsprozeß $^{14}$N (gamma, 2n) $^{12}$N zugrunde, wozu eine Röntgenstrahlung von mindestens 30,64 MeV notwendig ist. Aus diesem Grund erzeugt das dort verwendete Röntgengerät eine Bremsstrahlung von 35 bis 40 MeV, welche in einem schmalen Strahl zeilenweise über das auf einem Förderband durchlaufende Gepäckstück gerichtet wird. Die entstehende Annihilationsstrahlung wird dann mittels zweier gegenüberliegender Detektorzeilen auf der Basis einer Koinzidenzmessung registriert, wobei aus den geometrischen Zusammenhängen zwischen dem erregenden Röntgenstrahl und den zwei zeitgleiche 0,511 MeV Photonen registrierenden Detektoren auf den Ort und die dort befindliche Konzentration von stickstoffhaltiger Substanz im Gepäckstück geschossen werden kann.

Es ist Aufgabe der vorliegenden Erfindung eine Einrichtung zu schaffen, die sowohl zur Erkennung von stickstoffhaltigen Substanzen innerhalb eines Gepäckstückes als auch von phosphor-, chlor- und/oder sauerstoffhaltigen Substanzen geeignet ist, welche eine genauere räumliche Auflösung dieser Substanzen als bisher ermöglicht und eine möglichst niedrige Aktivierungsenergie erforderlich macht.

Diese Aufgabe wird durch eine nach den Merkmalen des Patentanspruches 1 ausgebildete Einrichtung bzw. durch ein nach den Merkmalen des Patentanspruches 11 ausgebildetes Verfahren gelöst.

Die Erfindung basiert auf der Erzeugung von $^{13}$N-Atomen, welche sich aus stickstoffhaltigen Substanzen durch Bestrahlung von Röntgen- bzw. Gammastrahlung mit Energien von 10 MeV bis maximal 14 MeV erzeugen lassen. Mittels einer Koinzidenzmeßeinrichtung bekannter Art kann dann eine erste grobe Aktivitätsdichteverteilung für das untersuchte Gepäckstück vorgenommen werden. Mittels eines gesonderten Röntgengerätes, welches der Akitivitätsmeßvorrichtung vor- oder nachgeschaltet sein kann, wird das Gepäckstück durchleuchtet und aus den Schattenbildern der Absorption bei mindestens zwei unterschiedlichen Röntgenstrahlenergien eine dreidimensionale Absorptionsdichteverteilung errechnet. Durch Verhältnisbildung zweier, bei jeweils unterschiedlichen Röntgenstrahlenergien gemessener Absorptionswerte der gleichen Stelle des Gepäckstückes läßt sich zumindest annähernd auf die Ordnungszahl der dort befindlichen Substanz schließen. Im allgemeinen genügt es, zwischen einigen Ordnungszahlbereichen unterscheiden zu können, um das Vorhandensein von Metallen die eine hohe Absorption haben, jedoch nicht zu den gesuchten Substanzen zählen direktieren zu können. Mittels der Ordnungszahl und der Absorptionsdichteverteilung läßt sich dann eine Massendichteverteilung errechnen, mittels derer die erste Aktivitätsdichteverteilung derart korrigiert werden, daß die Rekonstruktion einer genaueren dreidimensionalen Aktivitätsdichteverteilung innerhalb des Gepäckstückes möglich wird. Mit einer solchen genauen Aktivitätsdichteverteilung läßt sich dann bei Kenntnis der Aktivierungsenergien mit größerer Sicherheit als vorher auf das Vorhandensein von Spreng- oder Suchtstoffen schließen. Vorallem kann ein Gepäckstück bei einem ersten Verdacht an den verdächtigen Stellen einer zweiten Untersuchung unterzogen werden, bei der vorallem durch Anregung mittels einer Energie zwischen 15 und 18 MeV die Anwesenheit von sauerstoffhaltigen Substanzen und deren für Sprengstoffe typische Konzentration bestimmen läßt.

Weiterhin kann die Einrichtung zur Verbesserung der Fehlalarmrate auch dadurch verbessert werden, daß zusätzlich zu dem ersten Röntgengerät ein Röntgentomograph zur exakten Messung der Massendichteverteilung vorgesehen ist, durch welchen lediglich die aufgrund der ersten Messung als verdächtig eingestuften Gepäckstücke untersucht werden. Die durchschnittliche Untersuchungsgeschwindigkeit wird dadurch nur geringfügig reduziert, da die aufwendigere Untersuchung mittels des Röntgentomographens nur an den wenigen, in der Voruntersuchung als verdächtig eingestuften Gepäckstücken vorgenommen wird.

Die Erfindung wird im folgenden von Hand des in den Figuren teilweise schematisch dargestellten Ausführungsbeispiels näher beschrieben. Es zeigen

Fig. 1 eine Anlage zur Überprüfung von Gepäckstücken auf Spreng- oder Suchstoffe,

Fig. 2 ein Röntgengerät mit zwei Projektionen zur Ermittlung der Massendichteverteilung und

Fig. 3 ein Röntgengerät mit Teilprojektionen zur Ermittlung der Massendichteverteilung mit höherer Ortsauflösung.

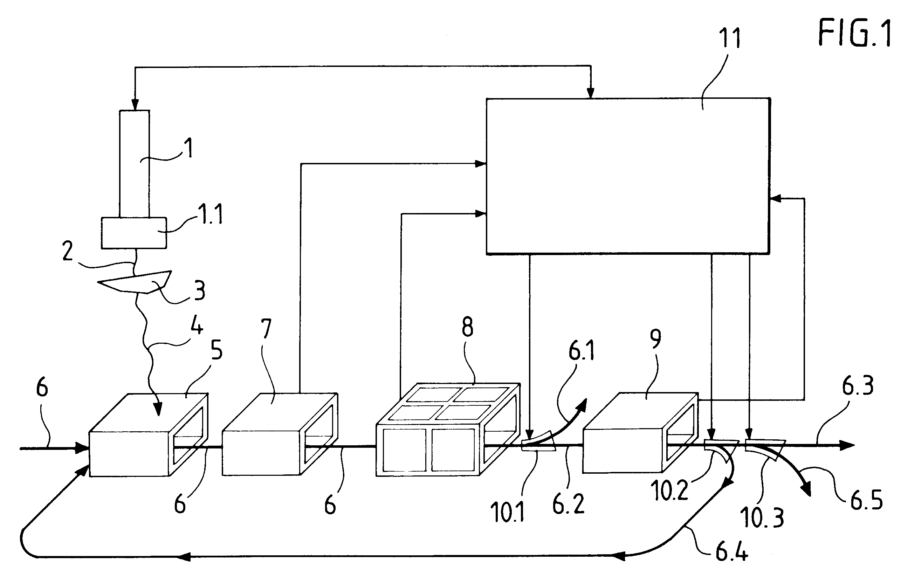

Die in Fig. 1 dargestellte Anlage weist einen Elektronenbeschleuniger 1 mit variabler Intensität auf, dem eine Strahlablenkung 1.1 nachgeschaltet ist. Der erzeugte Elektronenstrahl 2 trifft auf eine Bremsstrahlungsquelle 3, wobei die Bremsstrahlung 4 (Gammastrahlung) in eine tunnelförmige Bestrahlungskammer 5 gelangt, welche von einem Transportband 6 durchlaufen wird. Im Anschluß an die Bestrahlungskammer 5 ist ein ebenfalls von dem Transportband durchlaufenes tunnelförmiges Röntgengerät 7 angeordnet, an das sich eine ebenfalls tunnelförmige Aktivitätsmeßvorrichtung 8, z.B. eine sogenannte Angerkamera anschließt. Der Transportweg teilt sich dann in zwei Wege 6.1 und 6.2 auf, wobei der Transportweg 6.2 einen ebenfalls tunnelförmigen 3D-Röntgentomograph 9 durchläuft. Der Transportweg 6.2 teilt sich daraufhin zweimal hintereinander, wobei auf dem Weg 6.3 die zwar verdächtigen jedoch nach endgültiger Überprüfung freigegebenen Gepäckstücke zur Ausgabe gelangen, auf dem Weg 6.4 die verdächtigen Gepäckstücke zu einer Nachaktivierung an den Anfang der Anlage zurücktransportiert werden und auf dem Weg 6.5 die endgültig als verdächtig eingestuften Gepäckstücke weitergeführt werden. Die Umleitung der Gepäckstücke auf die Wege 6.1 bis 6.5 erfolgt durch entsprechende Weichen oder Schieber 10.1, 10.2 und 10.3, die von einem zentralen Rechner 11 gesteuert werden.

Die Steuerung des Elektronenbeschleunigers 1 erfolgt durch den zentralen Rechner 11 in der Weise, daß in einem ersten Bestrahlungszyklus die Bremsstrahlung 4 einen Energiebereich von 10 bis 14 MeV umfaßt. Die obere Grenze ist dabei so gewählt, daß die Schwellenenergie zur Anregung von Sauerstoff zu einem positronenstrahlenden Isotop gerade noch nicht erreicht wird, Substanzen wie Stickstoff, Chlor oder Phosphor jedoch schon zur Bildung von Positronstrahlern angeregt werden. Die Bestrahlung eines Gepäckstückes erfolgt dabei durch zeilenweises Ablenken des Elektronenstrahls und damit der erzeugten Bremsstrahlung 4, senkrecht zur Transportrichtung des Gepäckstückes, so daß dieses sukzessive schichtweise bestrahlt wird.

Da die Halbwertzeit von aktivierten Stickstoffatomen ($^{13}$N) etwa 10 Minuten beträgt, ist die Zeit bis zur Untersuchung in der Angerkamera 8 ausreichend groß, so daß vorher noch eine Röntgendurchleuchtung vorgenommen werden kann, welche die Bestimmung einer groben Massendichteverteilungim Gepäckstück zum Ziel hat. Hierzu wird das Gepäckstück aus mehreren Ansichten mit zwei oder drei Röntgenquellen durchleuchtet um daraus eine näherungsweise dreidimensionale Dichterekonstruktion des Gepäckstückes zu erstellen. Jede der Röntgenquellen kann eine an sich bekannte Röntgenröhre sein, die einen fächerförmigen Strahl aussendet. Das Energiespektrum jeder Röhre sollte dabei einen Bereich zwischen kleiner 70 keV und größer 90 bis 140 keV umfassen. Der Röntgenstrahl wird nach Durchgang durch das Gepäck von einer Detektorzeile erfaßt, die durch geeignete Abschirmung bei zwei Energien, nämlich $E_1$ kleiner 70 keV und $E_2$ größer 90 bis 140 keV detektieren.

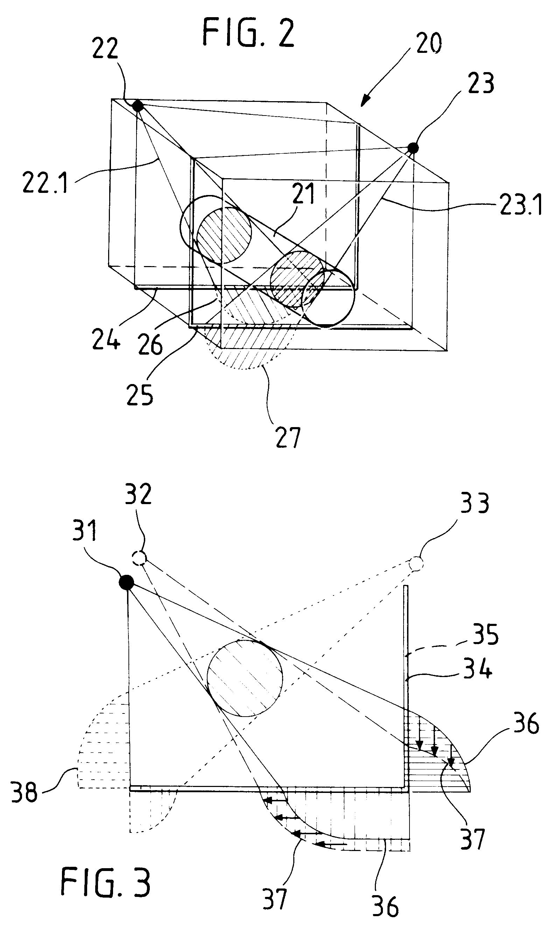

In Fig. 2 ist die Untersuchung eines Gepäckstückes 21 innerhalb eines Röntgengerätes 20 aus zwei Richtungen dargestellt. In den oberen Kanten des im Querschnitt rechteckigen Transportschachtes, durch welchen das Gepäck läuft sind zwei Röntgenquellen 22 und 23 versetzt zur Laufrichtung angeordnet, welche einen fächerförmigen Röntgenstrahl 22.1 und 23.1 aussenden. Jeder der Strahlen 22.1 und 23.1 trifft auf eine gegenüberliegende, L-förmige Detektorzeile 24 bzw. 25, mit denen die Absorption der Röntgenstrahlung durch das Gepäckstück 21 gemessen wird. Dabei entstehen, abhängig von den Umrissen des Gepäckstückes auf den Detektorzeilen 24 und 25 Schattenbilder 26 bzw. 27, die dem momentanen Ort des Gepäckstückes zugeordnet und zur Rekonstruktion der Massendichteverteilung verwendet werden.

Wie sich aus Fig. 2 leicht deuten läßt, reichen zwei Projektionen für eine eindeutige Rekonstruktion der Massendichteverteilung nicht aus, da z.B. zwei, im Röntgenstrahl hintereinander gelegene Objekte innerhalb eines Gepäckstückes aus den Schattenbildern nicht immer getrennt werden können.

Deshalb ist gemäß Fig. 3 vorgesehen, daß an einer Kante des Transportschachtes zwei Röntgenquellen 31 und 32 relativ nahe beieinander liegen, so daß aus dem Vergleich der zugehörigen Absorptionssignale aus den jeweils zugeordneten, L-förmigen Detektorzeilen 34 bzw. 35 ein Stereobildpaar abgeleitet werden kann. Der Stereovorsatz ist durch Pfeile zwischen den Absorptionssignalen 36 und 37 angedeutet. Daraus kann dann der Abstand von absorbierenden Objekten innerhalb des Gepäckstückes nach bekannten Stereoauswerteverfahren bestimmt werden. Durch das aus der gegenüberliegenden Röntgenquelle 33 entstehende Absorptionssignal, welche also unter einem Winkel von nahezu 90° gegenüber den anderen Projektionen entsteht, können die im Stereobild erkannten Objekte in ihren Umrissen besser dargestellt werden. Da aus dem Stereobild die Tiefenlage eines Objektes errechnet werden kann, kann dieses mit der dritten Projektion eindeutig korreliert werden und die Bildung von Scheinobjekten aus fehlerhaften bzw. mehrdeutigen Korrelationen vermieden werden. Damit wird eine näherungsweise Rekonstruktion der dreidimensionalen Dichteverteilung aus den Röntgenbildern aus nur drei Projektionen möglich, wogegen für eine exakte Rekonstruktion ungefähr so viele Projektionen erforderlich wären, wie die Bildauflösung der Detektorzeilen in Pixeln längs der Bildkante ausmacht, was jedoch für eine Untersuchung von Gepäckstücken mit realistischem Zeitaufwand nicht möglich wäre.

Weiterhin wird das Verhältnis der untersuchten Länge in Durchlaufrichtung des Gepäckstückes zu Breite und Höhe quer zur Durchlaufrichtung so gewählt, daß ein Punkt auf der Detektorlängsachse etwa in Detektormitte in einem großen Raumwinkelbereich von Detektorelementen umgeben ist. Der Raumwinkel sollte dabei möglichst größer als 60 % von $4\pi$ betragen. Dadurch kann das beispielsweise in IIIE-Transactions Medical Imaging, Vol. MI-2/1983, Page 16 bis 18 zur Anwendung kommen.

Damit die Röntgendetektoren auch Objekte vermessen können, die sich mit konstanter Geschwindigkeit durch den Meßkanal bewegen, ist es erforderlich, die jeweilige Position des Objektes in Längsrichtung mit einem Positionsmeßgerät zu bestimmen und die gemessenen Auftreffpunkte von Ereignisgeraden auf die Detektorelemente durch eine Additionsschaltung sofort in der Längsrichtung um den jeweiligen Versatz durch die Längsbewegung zu korrigieren. Damit erhalten alle Ereignisgeraden bezüglich des vermessenen Objektes denselben Bezugspunkt und können somit weiterverarbeitet werden, als ob sie aus einer Messung an einem ruhenden Objekt stammen würden. Somit können im Prinzip beliebig lange Objekte in dem Röntgengerät vermessen und damit der Durchsatz der Anlage gesteigert werden.

Nachdem ein Gepäckstück das Röntgengerät 7 zur Rekonstruktion der Massendichteverteilung durchlaufen hat, gelangt es in eine sogenannte Angerkameraart, welche im wesentlichen ein ortsauflösendes Detektorsystem für die aus der Positronenzerstrahlung auftretende Annihilationsstrahlung darstellt. Aufgrund von Koinzidenzmessungen wird hierin eine Liste der Koinzidenzereignisse erstellt, welche im nachgeschalteten Rechner 11 in eine erste Aktivitätsdichteverteilung des Gepäckstückes umgesetzt wird. Als Angerkamera eignet sich hierbei das Gerät "PENNPET" der Fa. UGM Medical Systems, Phil., USA.

Durch Korrelation der Massendichteverteilung, welche, wie oben beschrieben, aus den Absorptionsdichteverteilungen bei zwei unterschiedlichen Röntgenstrahlenergien ermittelt wurde, mit der aus den Werten der Angerkamera ermittelten ersten Aktikvitätsdichteverteilung läßt sich dann eine genaue zweite, dreidimensionale Aktivitätsdichteverteilung des Objektes errechnen.

Gepäckstücke, die eine vorgegebene Aktivitätsdichte nicht überschreiten, werden mittels einer vom Rechner 11 gesteuerten Weiche 10.1 zur Gepäckausgabe geleitet. Bei Überschreiten einer vorgegebenen Aktivitätsdichte wandert das Gepäckstück in einen Röntgentomographen 9, in welchem eine präzise dreidimensionale Massendichteteilung, insbesondere der Bereiche erhöhter Aktivitätsdichte vorgenommen wird. Führt diese Messung zu keiner für Sprengstoffe verdächtigen Massendichteverteilung, so wird das Gepäckstück über die ebenfalls rechnergesteuerten Weichen 10.2 und 10.3 freigegeben. Befinden sich jedoch die Bereiche erhöhter Aktivität auch innerhalb eines Massendichtebereiches, der für Sprengstoffe relevant ist, so wandert das Gepäckstück über die Weiche 10.2 auf dem Transportweg 6.4 wieder in die Bestrahlungskammer 5 wo es einer erneuten Bestrahlung bei einem zweiten Energieniveau zwischen 15 und 18 MeV unterzogen wird. Gammstrahlung in diesem Energiebereich (ab 15,7 MeV) regt die Kernreaktion $^{16}O$ ($\gamma$, n) $^{15}O$ an, liegt jedoch noch unter der Schwelle von 18,7 MeV für die Aktivierung von Kohlenstoff entsprechend der Kernreaktion $^{12}C$ ($\gamma$, n) $^{11}C$.

Mittels der Angerkamera wird dann nach ca. 30 Sekunden, wenn die Aktivität des ebenfalls angeregten Aluminiums abgeklungen ist, nochmals vermessen, um festzustellen ob in dem verdächtigen Raumbereich des Gepäckstückes außer Stickstoff auch noch eine ausreichende Menge von Sauerstoff vorhanden ist, um in dieser Kombination auf einen Sprengstoff hinzuweisen. Liegt das Verhältnis von Stickstoff zu Sauerstoff in einem für Sprengstoffe kritischen Bereich und ist die Menge ausreichend, dann ist ein weiteres verschärftes Indiz für das Vorhandensein eines Sprengstoffes gegeben und die Weiche 10.3 am Ende des Transportbandes wird dann zur Selektion dieses Gepäckstückes auf den Transportweg 6.5 umgestellt.

In gleicher Weise wie Stickstoff lassen sich auch die Elemente Chlor, Phosphor und, falls in Sprengstoffen vorhanden, auch Fluor nachweisen, die bei $\gamma$-Bestrahlung ebenfalls zur Bildung von positronstrahlenden Isotopen angeregt werden und zwar nach folgenden Kernreaktionen:

$^{35}$Cl $(\gamma, n)$ $^{34}$Cl bei 12,8 MeV, $^{31}$P $(\gamma, n)$ $^{30}$P bei 12,3 MeV

und

$^{19}$F $(\gamma, n)$ $^{18}$F bei 10,4 MeV.

**Patentansprüche**

1. Einrichtung zur Erkennung von stickstoff-, phosphor-, chlor- und/oder sauerstoffhaltigen Substanzen innerhalb eines Objektes, insbesondere von Spreng- oder Suchtstoffen in Gepäckstücken mit einer kernphysikalischen Aktivierungsvorrichtung zur Erzeugung von Positronenstrahlern aus Stickstoff, Phosphor, Chlor und/oder Sauerstoff und einer nachgeordneten Aktivitätsmeßvorrichtung zur Registrierung von Positron-Elektron-Annihilationsstrahlung, **dadurch gekennzeichnet,**
   - daß mittels der Aktivitätsmeßvorrichtung (8) aufgrund von Koinzidenzmessungen eine erste Aktivitätsdichteverteilung errechenbar ist,
   - daß der Aktivitätsmeßvorrichtung (8) ein Röntgengerät (7) zur Erkennung von Schattenbildern der Absorption des Objektes bei mindestens zwei unterschiedlichen Röntgenstrahlenergien vor- oder nachgeschaltet
   - und aus den Schattenbildern eine dreidimensionale Absorptionsdichteverteilung errechenbar ist,
   - wobei aus dem Verhältnis zweier, bei zwei unterschiedlichen Röntgenstrahlenergien gemessener Absorptionsmeßwerte der gleichen Stelle des Objektes zumindest zwei Ordnungszahlbereiche der an der Stelle des Objektes befindlichen Substanz unterscheidbar sind, woraus eine Massendichteverteilung bestimmbar ist und
   - daß aus den mit den Werten der Massendichteverteilung korrigierten Werten der Aktivitätsmeßvorrichtung (8) eine Rekonstruktion einer zweiten, dreidimensionalen Aktivitätsdichteverteilung innerhalb des Objektes vorgenommen wird.

2. Einrichtung nach Anspruch 1, **dadurch gekennzeichnet,** daß die Aktivitätsmeßvorrichtung (8) und das Röntgengerät (7) von einem gemeinsamen Transportband (6) durchlaufen werden und ein auf dem Transportband (6) befindliches Objekt in beiden Geräten bei gleicher räumlicher Zuordnung vermessen wird.

3. Einrichtung nach Anspruch 1 oder 2, **dadurch gekennzeichnet,** daß die Aktivierungsvorrichtung (1, 3, 5) Gammastrahlung (4) mit mindestens zwei unterschiedlichen Energieniveaus erzeugt.

4. Einrichtung nach Anspruch 3, **dadurch gekennzeichnet,** daß die Aktivierungsvorrichtung (1, 3, 5) eine Gammastrahlung (4) mit entweder einem ersten Energieniveau zwischen 10 und 14 MeV oder einem zweiten Energieniveau zwischen 15 und 18 MeV erzeugt.

5. Einrichtung nach Anspruch 3 oder 4, **dadurch gekennzeichnet,** daß zur Erkennung von sauerstoffhaltigen Substanzen innerhalb des Objektes die Werte der Aktivitätsmessung oder der Aktivitätsdichteverteilung nach einer ersten Bestrahlung mit einem ersten unteren Energieniveau der Gammastrahlung (4) von den Werten nach einer zweiten Bestrahlung mit einem zweiten höheren Energieniveau der Gammastrahlung (4) subtrahiert werden.

6. Einrichtung nach Anspruch 5, **dadurch gekennzeichnet,** daß die zweite Bestrahlung des Objektes auf Bereiche erhöhter Aktivitäts- oder Massendichte beschränkt ist.

7. Einrichtung nach einem der Ansprüche 1 bis 6, **dadurch gekennzeichnet,** daß die Aktivierungsvorrichtung (1, 3, 5) ein vorgegebenes räumliches Muster in der abgegebenen Strahlungsdosis aufweist.

8. Einrichtung nach einem der Ansprüche 1 bis 7, **dadurch gekennzeichnet,** daß das Röntgengerät (7) Schattenbilder der Absorption aus mindestens drei unterschiedlichen Richtungen erzeugt.

9. Einrichtung nach Anspruch 8, **dadurch gekennzeichnet,** daß zwei der drei Richtungen verglichen mit der dritten nur geringfügig differieren und eine stereoskopische Auswertung der Absorptionsmeßwerte ermöglichen (Fig. 3).

10. Einrichtung nach einem der Ansprüche 1 bis 9, **gekennzeichnet,** durch einen zusätzlichen Röntgentomograph (9) zur exakten Messung der Massendichteverteilung innerhalb eines mittels der Aktivitätsmeßvorrichtung (8) und des ersten Röntgengerätes (7) vorselektierten Objektes.

11. Verfahren zur Erkennung von stickstoff-, phosphor-, chlor- und/oder sauerstoffhaltigen Substanzen innerhalb eines Objektes, **gekennzeichnet durch** folgende Schritte:

a) Aktivierung der Stickstoff-, Phosphor-, Chlor- und/oder Sauerstoffatome mittels einer Gammastrahlung zur Bildung von Positronenstrahlern aus Stickstoff, Phosphor, Chlor und/oder Sauerstoff,

b) Messung der Positron-Elektron-Annihilationsstrahlung innerhalb des größten Teils des das Objekt umgebenden Raumwinkels,

c) Durchleuchten des Objektes mittels einer Röntgenstrahlung bei mindestens zwei unterschiedlichen Energieniveaus und Berechnung einer Massendichteverteilung aus den gemessenen Absorptionswerten mehrerer Schattenbilder des Objektes und

d) Berechnung einer dreidimensionalen Aktivitätsdichteverteilung aus den Meßwerten gemäß Schritt b) unter Berücksichtigung der errechneten Massendichteverteilung gemäß Schritt c).

FIG.1

EP 0 485 872 A2

EP 0 485 872 A2

FIG. 2

FIG. 3

8